# FASCICULE DE BREVET EUROPEEN

(11) **EP 3 120 098 B1**
(45) Date de publication et mention de la délivrance du brevet: **28.02.2018**
(21) Numéro de dépôt: 15711171.7
(22) Date de dépôt: 20.03.2015
(51) Int. Cl.: F28F 19/00, F28F 19/01, F28G 1/08, F28G 3/10, F28D 20/02

(54) **DISPOSITIF DE STOCKAGE THERMIQUE SOUS FORME DE CHALEUR LATENTE À PHASE DE CHARGE AMELIORÉE**
VERBESSERTE PHASENWECHSEL-LATENTWÄRMESPEICHERVORRICHTUNG
IMPROVED PHASE-CHANGE LATENT HEAT THERMAL STORAGE DEVICE

(30) Priorité: 21.03.2014 FR 1452393
(43) Date de publication de la demande: 25.01.2017
(73) Titulaire: Commissariat à l'Énergie Atomique et aux Énergies Alternatives, 75015 Paris (FR)
(72) Inventeur: COUTURIER, Raphaël, F-38360 Sassenage (FR); CHAZELLE, Benjamin, F-38400 Saint-martin-d'heres (FR); FOURMIGUE, Jean-François, F-38600 Fontaine (FR)
(74) Mandataire: Brevalex
(86) Numéro de dépôt international: PCT/EP2015/055928
(87) Numéro de publication internationale: WO 2015/140297

(56) Documents cités:
- DE-A1- 3 045 622
- DE-A1-102010 063 268
- FR-A1- 2 408 806
- US-A- 3 997 001
- US-A1- 2010 230 075
- US-A1- 2012 018 116

## Description

### DOMAINE TECHNIQUE ET ART ANTÉRIEUR

La présente invention se rapporte à un dispositif de stockage thermique sous forme de chaleur latente à phases de charge et de décharges améliorées, conforme au préambule de la revendication 1. Un tel dispositif est connu du document US 2010/230075 A1. Les centrales solaires thermiques à concentration nécessitent l'utilisation de dispositifs de stockage thermique par exemple pour stocker l'excès d'énergie thermique collectée.

La technologie solaire thermique à concentration (CSP pour "Concentrated Solar Power" en terminologie anglo-saxonne) consiste à utiliser le rayonnement solaire pour chauffer un fluide dans un champ solaire, le fluide servant directement ou indirectement de source chaude dans un cycle thermodynamique. La concentration permet d'atteindre des températures plus ou moins élevées et ainsi de bénéficier de rendements de conversion thermodynamiques plus ou moins importants.

Le fonctionnement optimisé de ce type de système de conversion est lié principalement à deux critères :
- le maintien d'une température de fluide constante en entrée du système de conversion (correspondant également à la sortie du « champ solaire »). Le rendement de ce type de système est en effet maximal pour une température de fonctionnement optimale et décroit lorsque cette température diminue ;
- la réduction des fluctuations de température autour d'une valeur moyenne, ce qui permet de moins solliciter le système de conversion, de diminuer la fatigue thermique de tous les organes et donc d'augmenter la durée de vie.

Dans une centrale solaire, le non-respect de ces critères peut être dû à un certain nombre d'éléments, notamment le passage de nuage sur le champ solaire, des erreurs de suivi (ou tracking) des miroirs, des fluctuations dues aux régulations du contrôle-commande, etc.

Sur une centrale solaire CSP, le système de conversion peut être alimenté en chaleur par le champ solaire, par le dispositif de stockage thermique si celui-ci existe, voire par les deux en même temps. Le respect des critères ci-dessus est en partie obtenu en disposant d'énergie thermique stockée disponible pour compenser les variations.

Le stockage de la chaleur peut être typiquement réalisé soit sous forme de chaleur sensible en faisant varier le niveau de température d'un matériau de stockage solide ou liquide, sous forme de chaleur latente en faisant changer de phase un matériau de stockage ou enfin sous forme d'énergie chimique en utilisant des réactions chimiques endothermiques et exothermiques.

Pour les centrales solaires à concentration à génération directe de vapeur, il est recommandé d'utiliser un système de stockage combiné utilisant à la fois du stockage de chaleur sous forme sensible et du stockage de chaleur sous forme latente.

Ce système de stockage comporte trois étages, un étage de stockage par chaleur sensible haute température, un étage de stockage par chaleur latente et un étage de stockage par chaleur sensible basse température.

La procédure de stockage de chaleur ou de charge du système est la suivante : l'eau est évaporée dans le champ solaire et est surchauffée ; cette vapeur passe à travers un premier étage de stockage sensible où elle se refroidit jusqu'à une température proche de celle de son changement de phase vapeur/liquide. Puis la vapeur passe à l'étage de stockage latent où elle cède sa chaleur latente au matériau à changement de phase, celui-ci passe de l'état solide à l'état liquide. La vapeur devient liquide à température de saturation, pour ensuite se sous-refroidir dans le dernier étage de stockage sensible.

Dans le cas du déstockage de la chaleur (phase de décharge), l'eau liquide en sortie de condenseur, qui est situé en aval de la turbine, arrive à l'étage sensible où elle est préchauffée jusqu'à une température proche de celle de son changement de phase vapeur/liquide, ce qui correspond à la récupération de la chaleur sensible du sous-refroidissement. Elle traverse ensuite l'étage de stockage latente où elle passe par l'évaporateur et se transforme en vapeur, ce qui correspond à la récupération de la chaleur latente stockée, le matériau à changement de phase se transforme alors en solide. Puis la vapeur produite est surchauffée dans l'étage de chaleur sensible avant d'être envoyée dans la turbine pour générer de l'électricité.

Dans ce système de stockage combiné Sensible/Latent/Sensible le transfert de chaleur a lieu avantageusement avec une différence de température quasi constante entre le fluide caloporteur et le milieu de stockage. Cette uniformité de l'échange thermique joue un rôle important dans l'efficacité des échangeurs

Le stockage mettant en oeuvre des matériaux à changement de phase qui passent de l'état solide à l'état liquide et inversement est intéressant car la quantité de la chaleur stockée par unité de volume est supérieure à celle obtenue par un système sensible, ce qui permet de réduire le volume de stockage et le volume de matériau. Dans ces systèmes, un matériau devient liquide au moment de la charge et se solidifie au moment de récupérer la chaleur.

Mais la plupart des matériaux à changement de phase présente une faible conductivité thermique, qui limite le flux de chaleur échangé par conduction entre le matériau à changement de phase et le fluide caloporteur.

Il existe deux types de systèmes de stockage sous forme de chaleur latente:
- les systèmes de stockage, dits passifs, dans lesquels le matériau à changement de phase n'a pas de circulation imposée et le transfert de chaleur se fait par conduction et par convection naturelle en phase liquide. Le caloporteur circule dans des tubes noyés dans le matériau à changement de phase, les mêmes tubes servent à l'évaporation et la condensation du caloporteur. Du fait de la faible conductivité thermique du matériau à changement de phase, une grande surface d'échange entre le caloporteur et le matériau à changement de phase est requise.

Par ailleurs, en phase de décharge, le matériau à changement de phase se solidifie et s'accroche fortement aux surfaces d'échange. Une couche de matériau à changement de phase solide d'épaisseur croissante recouvre les parois de l'échangeur et les isole thermiquement. La création de cette « résistance thermique » se traduit par une diminution rapide de la puissance échangée entre le caloporteur et le matériau à changement de phase.

Pour pallier ce problème, des échangeurs avec des tubes munis d'ailettes sont utilisés. Cependant l'ajout de ces ailettes n'annihile pas le phénomène de chute de puissance à la décharge. De plus cela détériore la densité de stockage, puisque le rapport volumique métal/ matériau à changement de phase augmente. Il en résulte une hausse du coût du stockage.

Il existe également des systèmes de stockage actifs dans lesquels le matériau à changement de phase est mis en circulation.

Un exemple d'un système de stockage actif comporte un réservoir de matériau à changement de phase traversé dans sa partie basse par un tube formant condenseur et dans sa partie haute par un tube formant évaporateur. Les échangeurs thermiques sont intégrés au réservoir de matériau à changement de phase.

En phase de décharge, le matériau à changement de phase se solidifie à la paroi du tube de l'évaporateur en cédant sa chaleur à l'eau qui se vaporise à l'intérieur du tube. Un système est alors mis en oeuvre pour racler le matériau à changement de phase solidifié sur la surface extérieure de l'évaporateur. Il se forme alors des « copeaux » de matériau à changement de phase qui, du fait de leur densité supérieure à celle de la phase liquide, se déposent au fond du réservoir.

Au fur et à mesure que la décharge se produit, le volume de liquide dans le réservoir diminue et le volume de solide augmente. Pendant la décharge, il existe un mouvement de particules solides vers le bas et en sens inverse un mouvement du liquide vers le haut, le liquide cédant sa chaleur à l'évaporateur.

En phase de charge, la vapeur d'eau qui se condense dans l'échangeur en partie basse cède sa chaleur aux copeaux de matériau à changement de phase qui se liquéfient. Au cours de la charge, de plus en plus de liquide est formé, il faut que ce liquide puisse passer au travers du lit de copeaux formés à la décharge. Il y a donc un mouvement de liquide vers le haut et un mouvement de particules solides vers le bas qui entrent en contact avec le condenseur.

Le fait de racler la surface de l'échangeur de décharge résout le problème de la formation de la couche solide de matériau à changement de phase aux surfaces d'échanges mais implique un système complexe, une consommation électrique importante, une maintenance des organes mécaniques en mouvement dans le liquide à une température de l'ordre de 300°C et un risque de coincement. Par ailleurs, les copeaux de matériau à changement de phase formés à la décharge ont tendance à s'agglomérer pour former une masse solide compacte, cet agglomérat posant deux difficultés à l'exploitation :
- lors de la décharge, si la puissance extraite du réservoir est trop importante, on forme beaucoup de copeaux au niveau du racleur qui doivent «décanter». Or il a été observé qui cette décantation prend du temps et que l'on peut former une «barrière» de particules solides pendant leur descente, ce qui empêche le liquide de remonter efficacement.
- Lors de la charge, du liquide est rapidement formé au contact du condenseur mais ensuite celui-ci est « bloqué » par la masse de matériau à changement de phase solide au-dessus de lui et ce solide ne descend pas efficacement au contact du condenseur. Le matériau à changement de phase liquide a en général un volume 10% supérieur à celui du matériau à changement de phase solide, par conséquent si la circulation du liquide est bloquée par un bouchon solide au-dessus de lui, la pression peut monter dans le réservoir et conduire à sa déformation puis à son éclatement.

Il a alors été envisagé de travailler dans un système actif avec un mélange dit "eutectique dilué", i.e. un mélange liquide et solide de sel qui garde toujours un comportement hydraulique proche de celui d'un liquide.

Le document US 2010/0230075 décrit un dispositif de stockage de chaleur au moyen d'un matériau à changement de phase. Le dispositif comporte un réservoir contenant du matériau à changement de phase, deux échangeurs pour la décharge situés à l'extérieur du réservoir et deux échangeurs pour la charge, dont un est disposé dans le fond du réservoir.

En phase de décharge, du sel fondu circule hors du réservoir et traverse les échangeurs formant un mélange liquide-solide de matériau à changement de phase qui est réintroduite dans le bas du réservoir.

En phase de charge, l'échangeur situé dans le fond du réservoir se trouve noyé dans les particules de matériau à changement de phase solide qui s'agglomèrent au fond du réservoir sous forme de bloc solide. Le liquide formé autour de l'échangeur est alors bloqué par l'agglomérat. Par ailleurs, ce dispositif de stockage met en oeuvre quatre échangeurs, le dispositif est alors encombrant et présente un coût de revient élevé. De plus, du fait de la présence d'un échangeur dans le réservoir, des tubes soumis à des hautes pressions, par exemple de l'ordre de 100 bars traversent le réservoir, ce qui rend la réalisation du réservoir plus complexe. Par ailleurs, l'un des échangeurs étant noyé dans le matériau à changement de phase son entretien est rendu complexe.

### EXPOSÉ DE L'INVENTION

Par conséquent un but de la présente invention est d'offrir un dispositif de stockage thermique sous forme de chaleur latente permettant au moins de pallier en phase de charge l'inconvénient dû à la présence d'un agglomérat de matériau à changement de phase afin de permettre la circulation du matériau à changement de phase liquide.

C'est également un but de la présente invention d'offrir un dispositif de stockage de réalisation simplifiée.

Le but précédemment énoncé est atteint par un dispositif de stockage thermique sous forme de chaleur latente comportant un réservoir contenant un matériau à changement de phase et au moins un échangeur de chaleur disposé à l'extérieur du réservoir et en communication fluidique avec l'intérieur du réservoir de sorte à assurer des échanges de chaleur entre le matériau à changement de phase et un caloporteur, et des moyens disposés dans le réservoir qui en phase de charge servent à initier au moins un chemin de circulation de liquide dans l'agglomérat ou entre l'agglomérat et le réservoir et des moyens pour réduire le volume de l'agglomérat.

Le chemin de circulation est initié de préférence en transformant une partie du matériau à changement de phase sous forme solide en liquide. Le chemin de circulation est par exemple initié par de la chaleur produite par effet Joule.

En initiant des chemins de circulation pour le matériau à changement de phase sous forme liquide à travers ou le long du matériau à changement de phase sous forme solide, la phase de charge peut avoir lieu, la circulation du matériau à changement de phase sous forme liquide n'étant pas gênée par le matériau à changement de phase solide formé en phase de décharge.

En d'autres termes, le dispositif selon l'invention comporte des moyens pour réduire le volume de l'agglomérat et rendre le MCP stocké dans l'agglomérat utilisable pour la charge, et des moyens pour créer une ou des voies de circulation pour le matériau à changement de phase liquide soit pour initier la réduction de volume de l'agglomérat, soit pour permettre la formation d'un mélange de phase liquide et de phase solide de matériau à changement de phase.

Dans un mode de réalisation, et pour initier une charge, la ou les voies de circulation sont réalisées dans l'agglomérat, le matériau à changement de phase sous forme liquide sortant de l'échangeur circule dans la ou les voies de circulation et provoque la fusion de l'agglomérat par échange thermique.

Pour une décharge avantageuse, deux échangeurs thermiques sont utilisés, fonctionnant alternativement, ce qui permet, lorsque l'épaisseur de matériau à changement de phase sur la surface extérieure des tubes de l'échangeur est trop importante, de pouvoir faire fonctionner l'autre échangeur et d'effectuer des opérations pour faire disparaître ce matériau à changement de phase solide. Ainsi la diminution de la puissance thermique en phase de décharge peut être évitée ou au moins limitée.

Dans ce mode de réalisation, lors de la phase de charge, le matériau à changement de phase qui est pompé est liquide, et il est surchauffé grâce aux échangeurs utilisés en décharge. Le réservoir comporte un distributeur de matériau à changement de phase liquide surchauffé, il a pour rôle de le répartir dans des voies de passages au sein du matériau à changement de phase solide (agglomérat). De manière avantageuse, les moyens pour formés les voies de circulation sont portés par le distributeur.

Dans un autre mode de réalisation, le matériau à changement de phase qui est pompé du réservoir en phase de charge est un mélange liquide et solide, formant un coulis, au moins une voie de circulation est alors formé par exemple le long de la surface intérieure du réservoir de sorte à créer au moins une voie de circulation entre la surface intérieure du réservoir et le matériau à changement de phase solide sous forme d'agglomérat. En outre des moyens pour réduire le volume de l'agglomérat sont tels qu'ils prélèvent des particules solides de l'agglomérat. Ainsi les voies de circulation permettent au matériau à changement de phase liquide de rencontrer les particules solides, formant ainsi un coulis, qui est entraîné vers l'échangeur thermique.

La présente invention a alors pour objet un dispositif de stockage thermique sous forme de chaleur latente comportant un réservoir contenant au moins un matériau à changement de phase, au moins un premier échangeur thermique disposé à l'extérieur du réservoir, ledit échangeur thermique étant destiné à assurer un échange thermique entre le matériau à changement de phase contenu dans le réservoir et un caloporteur en phase de charge et en phase de décharge, des premiers moyens de connexion entre le réservoir et l'échangeur thermique afin d'assurer une circulation du matériau à changement de phase contenu dans le réservoir à travers le premier échangeur thermique, des moyens de mise en circulation du matériau à changement de phase entre le réservoir et le premier échangeur thermique, le matériau à changement de phase étant dans le réservoir en partie en phase solide formant un agglomérat, au moins en début d'une phase de charge, ledit agglomérat étant situé dans une partie inférieure du réservoir, ledit dispositif comportant des moyens aptes à créer au moins une voie de circulation dans l'agglomérat et/ou entre l'agglomérat et une paroi du réservoir entre une zone supérieure et une zone inférieure de sorte à assurer une circulation du matériau à changement de phase liquide dans l'agglomérat et/ou entre l'agglomérat et une paroi du réservoir, et des moyens internes au réservoir assurant une réduction du volume de l'agglomérat et permettant la circulation de matériau à changement de phase vers le premier échangeur thermique, dit moyens de réduction.

Dans un mode de réalisation, les moyens de réduction sont destinés à être disposés dans l'agglomérat.

Les moyens sont par exemple aptes à créer au moins une voie de circulation sont des moyens aptes à apporter ou à générer de la chaleur dans ou autour de l'agglomérat. Les moyens aptes à créer au moins une voie de circulation peuvent par exemple générer de la chaleur par effet Joule.

Les moyens aptes à créer au moins une voie de circulation sont avantageusement disposés au moins dans la zone centrale du réservoir.

Les moyens de réduction peuvent assurer une circulation du matériau à changement de phase dans la voie de circulation.

Dans un mode de réalisation, les moyens de réduction comportent un distributeur de charge comprenant au moins un tube muni d'une première extrémité connectée au premier échangeur thermique de sorte qu'en phase de charge le premier échangeur thermique alimente le tube en matériau à changement de phase liquide, ledit tube étant muni d'une deuxième extrémité ouverte débouchant dans ladite voie de circulation. De préférence, les moyens aptes à créer au moins une voie de circulation sont aptes à créer plusieurs voies de circulation et les moyens assurant une réduction du volume de l'agglomérat comportent un distributeur comprenant autant de tubes que de voies de circulation, lesdits tubes étant alimentés en parallèle par le premier échangeur thermique en phase de charge.

Les moyens aptes à créer au moins une voie de circulation peuvent être portés par le ou les tubes du distributeur de charge, lesdits moyens étant formés par des traçages électriques chauffants reliés à une alimentation électrique.

Le dispositif de stockage thermique peut comporter un distributeur de décharge comprenant une extrémité connectée au premier échangeur thermique de sorte qu'en phase de décharge le premier échangeur thermique alimente le distributeur de décharge en un mélange de phase liquide et de phase solide du matériau à changement de phase.

Les moyens aptes à créer au moins une voie de circulation peuvent être portés par une paroi latérale du réservoir de sorte à créer au moins une voie de circulation entre l'agglomérat et la paroi latérale du réservoir. De préférence, les moyens aptes à créer au moins une voie de circulation s'étendent sur une hauteur de la paroi latérale égale au moins à une hauteur maximale de l'agglomérat.

Dans un autre mode de réalisation, les moyens de réduction comportent des moyens d'abrasion de l'agglomérat réduisant son volume par retrait de copeaux de matériau à changement de phase, de sorte qu'en phase de charge, un mélange de phase solide et de phase liquide de matériau à changement de phase circule du réservoir vers le premier échangeur thermique. De préférence, les moyens d'abrasion sont disposés dans la partie inférieure du réservoir de sorte que la majeure partie du volume de l'agglomérat soit située sur les moyens d'abrasion.

Les moyens d'abrasion peuvent comporter un plateau tournant apte à tourner dans le réservoir de sorte à frotter contre l'agglomérat et des moyens de mise en rotation du plateau tournant, ledit plateau tournant comportant des éléments d'abrasion destinés à être en contact avec l'agglomérat.

De manière préférée, le dispositif de stockage thermique comporte un deuxième échangeur thermique et des deuxièmes moyens de connexion entre le réservoir et le deuxième échangeur thermique afin d'assurer un circulation du matériau à changement de phase contenu dans le réservoir à travers le deuxième échangeur, et des moyens de régulation du débit dans le premier échangeur thermique et dans le deuxième échangeur thermique.

Le dispositif de stockage thermique peut comporter des moyens de surveillance de la puissance thermique échangée au sein des premier et deuxième échangeurs thermiques et une unité de contrôle contrôlant les moyens de régulation du débit de sorte qu'en cas de détection d'un puissance thermique échangée au sein d'un des premier et deuxième échangeurs thermiques , inférieure à un seuil donné, le débit soit réduit dans ledit échangeur thermique et le débit soit augmenté dans l'autre échangeur thermique.

Par exemple, le premier et/ou le deuxième échangeur thermique comportent un calandre et au moins un tube, le matériau changement de phase circulant dans la calandre et le caloporteur circulant dans le tube, un revêtement de surface sur une surface extérieure du tube destinée à être en contact avec le matériau à changement de phase, ledit revêtement de surface présentant une faible mouillabilité par rapport au matériau à changement de phase. Le revêtement de surface peut être un chromage, un polissage ou un dépôt de nitrure de bore.

Dans un exemple avantageux, le matériau à changement de phase est du NaNO₃ + 1% NaOH.

La présente invention a également pour objet un système de stockage comportant un dispositif de stockage sous forme de chaleur latente selon l'invention, un dispositif de stockage thermique à haute température sous forme de chaleur sensible, un dispositif de stockage thermique à basse température sous forme de chaleur sensible, lesdits dispositifs de stockage thermique étant connectés de sorte que le caloporteur circule en phase de charge dans le dispositif de stockage thermique à haute température sous forme de chaleur sensible, puis dans le dispositif de stockage sous forme de chaleur latente, puis dans le dispositif de stockage thermique à basse température sous forme de chaleur sensible, et en phase de décharge le caloporteur circule dans le dispositif de stockage thermique à basse température sous forme de chaleur sensible, puis dans le dispositif de stockage sous forme de chaleur latente , puis dans le dispositif de stockage thermique à haute température sous forme de chaleur sensible.

La présente invention a également pour objet une centrale solaire à concentration comportant au moins un champ solaire, des moyens de conversion de l'énergie thermique et au moins un système de stockage thermique selon l'invention.

La présente invention a également pour objet un procédé de fonctionnement d'un dispositif de stockage selon l'invention, un caloporteur circulant dans ledit au moins un échangeur thermique, comportant :
en phase de charge les étapes :
   - création d'au moins une voie de circulation dans l'agglomérat,
   - réduction du volume de l'agglomérat,
   - circulation du matériau à changement de phase issu au moins en partie de la réduction de volume de l'agglomérat vers l'échangeur thermique,
   - alimentation du réservoir avec le matériau à changement de phase liquide sortant de l'échangeur thermique, et
en phase de décharge,
   - mise en circulation du matériau à changement de phase liquide entre le réservoir et l'échangeur thermique,
   - production du mélange liquide solide par l'échangeur thermique,
   - alimentation du réservoir avec un mélange de phase liquide et de phase solide du matériau à changement de phase sortant de l'échangeur thermique,
   - accumulation de la phase solide du matériau à changement de phase dans la partie inférieure du réservoir.

Dans un mode de réalisation, la réduction du volume de l'agglomérat peut être obtenue par circulation de matériau à changement de phase surchauffé dans la voie de circulation et par fusion d'une partie de l'agglomérat.

Dans un autre mode de réalisation, la réduction du volume de l'agglomérat est obtenue par abrasion de l'agglomérat.

Dans le cas où le dispositif comporte deux échangeurs thermiques, et lors de la phase de décharge, du matériau à changement de phase circule dans l'un des échangeurs thermiques avec un débit plus important que dans l'autre échangeur thermique, ledit procédé peut comporte les étapes :
- la surveillance la puissance thermique échangée dans l'échangeur thermique dans lequel le matériau à changement de phase circule avec le plus grand débit,
- si la puissance thermique échangée est inférieure à un seuil donné, réduction du débit dans ledit échangeur thermique et augmentation du débit dans l'autre échangeur thermique.

Il peut être prévu une étape de retrait du matériau à changement de phase solide déposé sur des surfaces d'échange thermique dans l'échangeur thermique dans lequel la chute de puissance a été détectée.

L'étape de retrait peut prévoir l'arrêt de la circulation du caloporteur dans ledit échangeur thermique ou la circulation de vapeur surchauffée dans ledit échangeur thermique.

### BRÈVE DESCRIPTION DES DESSINS

La présente invention sera mieux comprise à l'aide de la description qui va suivre et des dessins en annexes sur lesquels :
- la figure 1 est une représentation schématique d'un premier mode de réalisation d'un dispositif de stockage thermique sous forme de chaleur latente en phase de décharge,
- la figure 2 est une représentation schématique du dispositif de la figure 1 en phase de charge,
- la figure 3 est une représentation schématique d'un deuxième mode de réalisation d'un dispositif de stockage thermique sous forme de chaleur latente,
- la figure 4 est une vue de détail des moyens destinés à réduire le volume de l'agglomérat mis en oeuvre dans le deuxième mode de réalisation,
- la figure 5 est une représentation schématique d'une centrale solaire comportant un système de stockage thermique comprenant le dispositif de stockage selon l'invention.

### EXPOSÉ DÉTAILLÉ DE MODES DE RÉALISATION PARTICULIERS

Le dispositif de stockage thermique qui va être décrit est particulièrement adapté à être utilisé en association avec des dispositifs de stockage thermique sous forme de chaleur sensible, par exemple pour des centrales solaires. Mais il sera compris que le dispositif de stockage sous forme de chaleur latent peut être utilisé dans d'autres applications.

Dans les modes de réalisation, le matériau à changement de phase solide présente une densité supérieure à celle du matériau à changement de phase liquide, par exemple le NaNo₃.

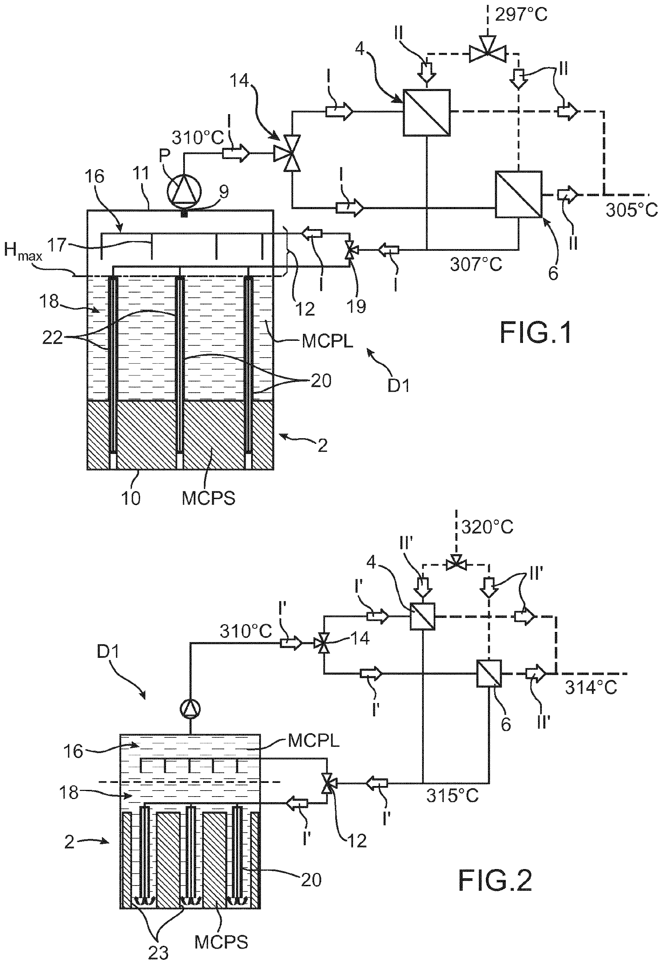

Sur les figures 1 et 2, on peut voir un dispositif D1 de stockage thermique sous forme de chaleur latente selon un premier mode de réalisation. Sur la figure 1, le dispositif est en phase de décharge et sur la figure 2, le dispositif est en phase de charge.

Dans ce premier mode de réalisation, en phase de charge le matériau à changement de phase qui pénètre dans l'échangeur thermique est liquide.

Le dispositif D1 comporte un réservoir 2 contenant du matériau à changement de phase, désigné par la suite MCP, au moins un échangeur thermique 4. Dans l'exemple représenté et de manière avantageuse le dispositif comporte deux échangeurs thermiques 4 et 6. Les échangeurs thermiques sont destinés à assurer un échange de chaleur entre le MCP qui est stocké dans le réservoir 2 et un caloporteur, par exemple de l'eau ou de l'huile chauffée par la centrale solaire. Les échangeurs sont disposés à l'extérieur du réservoir. Chaque échangeur est utilisé en phase de charge et en phase de décharge, ce qui simplifie la réalisation du dispositif de stockage.

Le MCP peut être pur ou être un mélange de plusieurs MCP.

Chaque échangeur 4, 6 est connecté fluidiquement au réservoir 2 et à la source de caloporteur de manière séparée.

Le réservoir est obturé à son extrémité inférieure par un fond inférieur 10 et à son extrémité supérieure par un fond supérieur 11. La cuve du réservoir peut être à base circulaire, rectangulaire ou hexagonale par exemple.

Il comporte un orifice de passage 9 formant sortie d'évacuation du fluide dans le fond supérieur 11 , qui est connecté aux deux échangeurs 4, 6 et il comporte des orifices de passage 12 formant les entrées d'alimentation du réservoir en MCP. Des moyens de régulation du débit 14 sont prévus entre la sortie d'évacuation 8 et les échangeurs 4, 6 aptes à réguler le débit dans les deux échangeurs, ces moyens sont par exemple formés par des vannes.

Chacun des échangeurs est dimensionné pour la pleine puissance de décharge.

Une pompe P est prévue en aval de la sortie d'évacuation 9 assurant une mise en circulation du MCP dans tout le dispositif.

Le réservoir comporte deux distributeurs d'alimentation 16, 18 connectés à l'entrée d'alimentation 12.

Des moyens de commutation 19 sont prévus pour pouvoir faire circuler le MCP dans l'un ou l'autre des distributeurs 16, 18.

Le distributeur d'alimentation 16 est désigné "distributeur de décharge" et est destiné à injecter le MCP dans le réservoir en phase de décharge. Le distributeur de décharge 16 comporte un injecteur, et avantageusement plusieurs injecteurs 17. En phase de décharge le MCP injecté dans le réservoir est un mélange de MCP solide et de MCP liquide. Le MCP solide tombe au fond du réservoir, s'accumule et forme un agglomérat désigné MCPS. Sur la figure 1, on peut voir l'agglomérat en cours de formation. Le distributeur de décharge 16 est de préférence situé dans une zone supérieure du réservoir, de préférence à une hauteur supérieure à la hauteur maximale de l'agglomérat désigné par Hmax sur la figure 1.

Le MCP liquide est désigné MCPL.

Le distributeur d'alimentation 18 est désigné "distributeur de charge" 18 et est destiné à injecter le MCP dans le réservoir en phase de charge. Le distributeur de charge 18 comporte un injecteur, avantageusement plusieurs injecteurs 20, s'étendant sur une partie au moins de la hauteur du réservoir et sont destinés à être au moins en partie immergés dans l'agglomérat MCPS. Le distributeur de charge 18 est situé en dessous du distributeur de décharge 16.

Le réservoir 2 comporte également des moyens 22 pour créer des voies de circulation 23 dans l'agglomérat MCPS au niveau des injecteurs 20 du distributeur de charge 18. Les moyens 22 sont tels qu'ils apportent de la chaleur pour fondre localement l'agglomérat MCPS. Par exemple ils sont formés par traçages ou résistances électriques disposés sur les injecteurs et produisant de la chaleur par effet Joule. Les traçages électriques assurent avantageusement une fusion tout autour des injecteurs et ainsi la formation de voies de circulation autour des injecteurs. D'autres moyens pour apporter ou générer de la chaleur au niveau des injecteurs peuvent être prévus par exemple des moyens générant de la chaleur par induction. Alternativement, les moyens 22 pourraient être distincts des injecteurs et être juxtaposés aux injecteurs. En variante, les moyens générant de la chaleur pourrait comporter une électrode à chaque extrémité des injecteurs ou utilisant un fluide circulant dans une conduite située en périphérie des injecteurs, la conduite pouvant par exemple être un caloduc ou un échangeur tubulaire, la source chaude peut alors être le circuit de MCP surchauffé en permettant sa circulation par un circuit ayant ses entrées et sortie en partie haute dans la réserve liquide ou alors le fluide caloporteur à stocker.

Le distributeur de charge 18 permet de réduire le volume de l'agglomérat MCPS grâce à la circulation du MCP liquide surchauffé dans les voies de circulation qu'il forme, provoquant la fusion de l'agglomérat MCPS.

La cuve peut également comporter des traçages électriques sur sa surface extérieure.

Les injecteurs forment un réseau au sein de l'agglomérat MCPS. L'espacement entre les injecteurs est fonction du temps de charge souhaitée. Par exemple les injecteurs sont disposés à 10 cm les uns des autres.

Les échangeurs sont par exemple du type tubes calandre. Ils comportent un faisceau de tubes, disposés à l'intérieur de la calandre. Le caloporteur sous pression circule à l'intérieur des tubes et le MCP circule à l'intérieur de la calandre, autour des tubes. Les échangeurs étant situés à l'extérieur du réservoir, il n'y a pas de circulation de caloporteur sous pression au sein du réservoir, la fabrication du réservoir est donc simplifiée.

De manière avantageuse, la surface d'échange thermique extérieure entre le caloporteur et le MCP comporte un revêtement de surface tel que le MCP présente une faible mouillabilité sur ce revêtement de surface ainsi les lieux de nucléation seront moins nombreux et la force à appliquer pour décrocher le MCP sera d'autant plus faible en décharge. De préférence le revêtement de surface est tel qu'il permet de décrocher les particules solides formées en décharge par la seule force qu'exerce le fluide sur les parois lors de son écoulement.

Par exemple, des traitements de surface de type chromage, polissage ou encore dépôt de nitrure de bore qui limitent l'accrochage du MCP solide et en outre présentent l'avantage de bien résister en température.

Dans l'exemple représenté en décharge (figure 1), deux échangeurs thermiques sont mis en oeuvre et sont destinés à fonctionner en alternance. Ainsi lorsque l'un des échangeurs présente une épaisseur de MCP solide trop importante sur la surface extérieure des tubes qui réduit considérablement les échanges thermiques, celui-ci est au moins en partie court-circuité par l'autre échangeur qui est vierge de MCP solide sur les tubes et peut développer la puissance souhaité.

Les moyens de régulation du débit 14 permettent alors de remplacer l'échangeur "encrassé" par l'échangeur "non encrassé", ce qui permet d'une part d'effectuer un désencrassement de l'échangeur encrassé, et d'autre part de pouvoir fournir la puissance nécessaire au fluide caloporteur grâce à l'échangeur « non encrassé ».

De préférence les échangeurs comportent des moyens pour fondre le MCP solidifié sur les tubes. Par exemple, des traçages électriques similaires à ceux prévus sur les injecteurs du distributeur de charge peuvent être prévus, provoquant l'apparition d'un film liquide sur la surface extérieure des tubes et le détachement du MCP solide qui est emporté par l'écoulement du MCP liquide.

En variante, on peut prévoir d'arrêter la circulation du caloporteur dans les tubes, ce qui correspond à l'arrêt de l'apport d'eau à température de saturation dans le cas d'une application à une centrale solaire, ce qui provoque une hausse de la température de la surface d'échange et la création d'un film liquide sur la surface extérieure des tubes, un détachement du MCP solide et son entraînement par le fluide.

En variante, dans le cas d'une application à une centrale solaire et dans le cas où le dispositif selon l'invention est associé à un étage de stockage par chaleur sensible "haute température", on prévoit une injection momentanée de vapeur surchauffée issue de l'étage sensible « haute température ».

L'injection de vapeur et l'arrêt de la circulation de caloporteur présentent l'avantage de ne pas consommer d'électricité contrairement aux traçages électriques sur les tubes. Par ailleurs, ils n'impliquent pas de modification des échangeurs, alors que dans le cas de traçages électriques sur les tubes la réalisation de tels échangeurs a un prix de revient important.

De préférence, on choisit des MCP qui présentent des solidifications progressives, tels que le mélange de sel de type NANO₃+1%NaOH.

Le fonctionnement du dispositif de stockage des figures 1 et 2 va maintenant être décrit.

En phase de décharge représentée sur la figure 1, le MCP contenu dans le réservoir est liquide. On souhaite récupérer la chaleur stockée dans le MCP par exemple pour faire fonctionner une turbine. Le MCP est par exemple stocké à 310°C.

La circulation du MCP est symbolisée par les flèches I et la circulation du caloporteur est symbolisé par les flèches II.

Le MCP liquide est aspiré par la pompe P par la sortie d'évacuation 8 et circule dans l'un ou l'autre des échangeurs 4,6, par exemple l'échangeur 4, les moyens de régulation du débit 14 limitent la circulation du MCP dans l'échangeur 6 à un débit minimal. On suppose qu'initialement les deux échangeurs ne sont pas encrassés.

De préférence, on fait circuler en permanence du MCP dans les deux échangeurs, dans l'un le débit correspond à un fonctionnement normal et dans l'autre le débit de MCP correspond à un fonctionnement en mode d'attente.

Le MCP liquide traverse l'échangeur 4 et échange de la chaleur avec le caloporteur qui circule dans les tubes. Par exemple le caloporteur est de l'eau entrant à 297°C, elle ressort de l'échangeur sous forme vaporisée à 305°C, le MCP se solidifie en partie en perdant de la chaleur, il se forme alors un coulis en sortie de l'échangeur 4.

Dans la présente demande, on entend par "coulis" un mélange liquide-solide ayant les propriétés physiques d'un fluide, c'est-à-dire ayant la capacité de circuler dans un circuit de tuyauteries. Le coulis contient généralement au plus 60% de MCP solide pour assurer sa circulation. Le coulis peut être composé d'un corps pur ou d'un mélange de corps purs.

Le coulis de MCP est alors déversé dans le réservoir 2 par le distributeur de décharge 17, le MCP solide sous forme de copeaux décante et se dépose dans la partie inférieure du réservoir. Un agglomérat formé des copeaux de MCP se forme dans la partie inférieure du réservoir, les copeaux se soudent entre eux. Il est à noter qu'il reste une phase liquide entre les copeaux.

Au cours des échanges thermiques dans l'échangeur 4, du MCP solide se fixe sur la surface extérieure des tubes provoquant une baisse de la puissance transférée entre le MCP et le caloporteur. Cette baisse de puissance transférée est par exemple détectée en effectuant une mesure de température et de débit de la vapeur en sortie de l'échangeur. Lorsque cette baisse dépasse un seuil donné, les moyens de régulation de débit 14 sont commandés de sorte à réduire le débit de MCP dans l'échangeur 4 et à augmenter le débit de MCP dans l'échangeur 6. Le transfert de puissance principal entre le caloporteur et le MCP liquide se poursuit dans l'échangeur 6. Pendant ce temps, le MCP solide déposé sur la surface extérieure des tubes est retiré comme cela a été expliqué ci-dessus, soit au moyens de résistances thermiques prévues sur les tubes, soit en arrêtant la circulation du caloporteur, soit en injectant de la vapeur surchauffée dans les tubes dans le cas d'une centrale solaire à production directe de vapeur. En faisant circuler en permanence du MCP liquide dans l'échangeur en cours de désencrassement, on assure une évacuation du MCP solide décollé des tubes. Par exemple, le débit est compris entre 10% et 25% du débit nominal en fonctionnement normal. Un coulis sort de l'échangeur 4.

En phase de charge représenté sur la figure 2, les moyens de commutation 19 sont commandés de sorte que l'alimentation en MCP du réservoir se fasse par le distributeur de charge 18.

En phase de charge, on souhaite stocker de la chaleur dans le réservoir, une partie du MCP contenu dans le réservoir est solide et forme l'agglomérat MCPS dans la partie inférieure du réservoir. Les injecteurs traversent l'agglomérat MCPS au moins sur une partie de sa hauteur.

La circulation du MCP est symbolisé par les flèches I' et la circulation du caloporteur est symbolisé par les flèches II'.

Tout d'abord on provoque la réduction de l'agglomérat en provoquant la fonte locale de l'agglomérat MCPS le long des injecteurs en alimentant les traçages électriques portés par les injecteurs. Le MCP solide se liquéfie autour des injecteurs.

Cette réduction permet de créer des voies liquides 23 au sein de l'agglomérat

Il est à noter que les traçages électriques ne servent qu'à assurer une fonte locale du MCP afin de pouvoir assurer la circulation du MCP surchauffé le long des injecteurs. Les traçages électriques ne servent qu'au démarrage et leur alimentation est interrompue dés l'apparition des voies de circulation. Par exemple, l'alimentation électrique est interrompue au bout d'un temps donné, préalablement déterminé.

Du MCP liquide est simultanément aspiré par la pompe et traverse les échangeurs, il est alors échauffé. Il est par exemple prélevé à 310°C dans le réservoir et sort des échangeurs à 315°C. Quant au caloporteur, il entre sous forme vapeur dans les échangeurs à 320°C et en sort sous forme liquide à 314°C. Le MCP liquide échauffé est renvoyé dans le réservoir via les injecteurs, ce MCP liquide circule dans les injecteurs vers le bas du réservoir, sort des injecteurs et remonte dans les voies de circulation formées préalablement par chauffage. Le MCP liquide "chaud" cède sa chaleur au MCP solide de l'agglomérat et assure sa fusion. Au fur et à mesure l'agglomérat fond. Ainsi on assure une circulation du MCP liquide en vu de sa charge. Grâce à l'invention, l'agglomérat n'empêche plus la circulation du MCP liquide lors de la charge.

Plus les injecteurs pénètrent dans l'agglomérat, plus le chemin de circulation du MCP liquide et long et plus la surface d'échange est grande. En outre, le nombre d'injecteurs est suffisant pour permettre une fusion transversale homogène de l'agglomérat.

Les transferts de chaleur, à la fois dans le réservoir et dans les échangeurs, sont des transferts de type convectif forcé. Les échanges thermiques sont améliorés, ce qui permet de limiter la taille des voies de circulation à former et la taille des échangeurs pour la surchauffe du MCP.

On constate qu'une partie de la charge s'effectue au sein du réservoir lors de la fusion du MCP solide par la circulation du MCP liquide surchauffée dans les voies de circulation.

Ce mode de réalisation présente l'avantage d'être de réalisation très simple, puisqu'aucune pièce fragile n'est mise en mouvement. La construction du réservoir est simplifiée, il ne requiert que la mise en place des distributeurs de charge et de décharge. Par ailleurs, aucun tube sous pression ne circule dans le réservoir.

Par ailleurs dans ce mode de réalisation, seul du MCP liquide est mis en mouvement par la pompe, une bonne gestion du débit peut alors être assurée et la consommation électrique de la pompe est aussi diminuée.

En outre, il permet de contrôler la puissance thermique échangée puisque dès que celle-ci diminue, on commute au moins en partie la circulation du MCP d'un échangeur à l'autre. On peut donc maintenir la puissance échangée à une valeur optimale.

Il est à noter également que ce dispositif peut fonctionner avec un seul échangeur. En effet, le revêtement des tubes et le choix d'un MCP adapté peuvent être suffisants pour éviter le dépôt de MCP solide sur la surface extérieure des tubes.

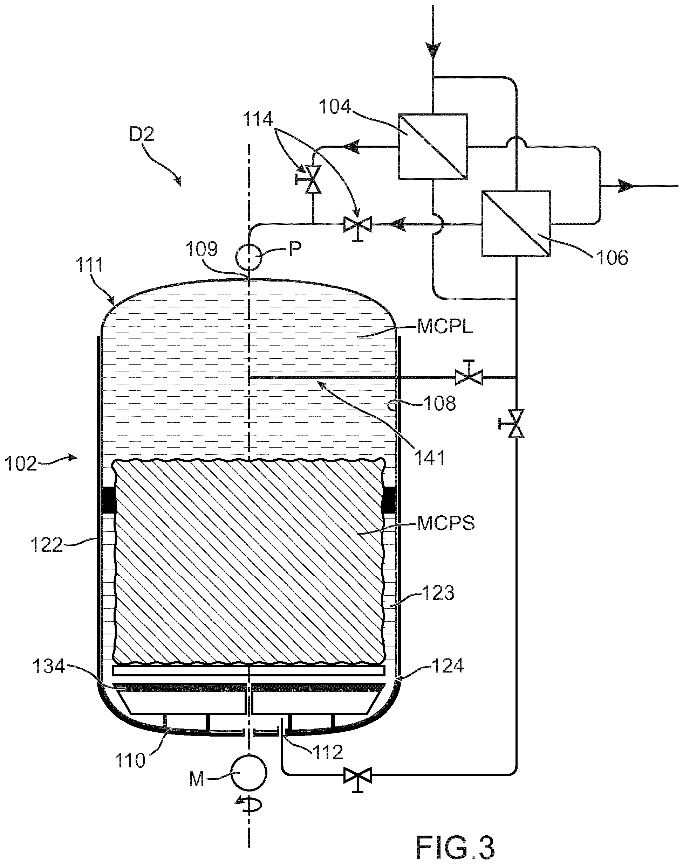

Sur la figure 3, on peut voir un deuxième mode de réalisation d'un dispositif D2 de stockage selon l'invention. Le dispositif D2 diffère du dispositif D1 en ce qu'il fait circuler du coulis entre le réservoir et un échangeur en phase de charge.

Le dispositif comporte un réservoir 102 et au moins un échangeur de chaleur 104, de préférence deux échangeurs de chaleur 104, 106 situés à l'extérieur du réservoir 102. Le réservoir contient du MCP.

Chaque échangeur 104, 106 est connecté fluidiquement au réservoir 102 et à la source de caloporteur de manière séparée.

Le réservoir comporte une virole 108 obturée à ses deux extrémités par un fond inférieur 110 et un fond supérieur 111. Dans l'exemple représenté, les fonds sont bombés. Il comporte un premier orifice de passage 109 dans le fond supérieur 111 et un deuxième orifice de passage 112 dans le fond inférieur 110, de préférence dans sa partie la plus basse. Le réservoir est connecté aux deux échangeurs 104, 106 via les deux orifices de passages 109, 112. Des moyens de régulation du débit 114 sont prévus entre l'orifice de passage 109 et les échangeurs 104, 106 aptes à réguler le débit dans les deux échangeurs, ces moyens sont par exemple formés par des vannes.

Chacun des échangeurs est dimensionné pour la pleine puissance de décharge.

Comme dans le premier mode de réalisation, les échangeurs 104, 106 sont par exemple du type tubes calandre. La surface extérieure des tubes peut être avantageusement recouverte d'un revêtement de surface réduisant l'accrochage es particules de MCP solide.

Une pompe P est prévue pour faire circuler le MCP dans le dispositif. De manière avantageuse, la pompe P est disposée au niveau de l'orifice de passage 109, afin qu'il n'y ait pas de risque qu'elle aspire du coulis. En effet, il y a toujours du MCP liquide dans la partie supérieure du réservoir.

Le réservoir comporte également des moyens 122 pour créer au moins une voie de circulation 123 entre l'agglomérat MCPS et la virole 108. Les moyens 122 sont formés par exemple traçages électriques disposés sur la surface extérieure de la virole. D'autres moyens pour apporter ou générer de la chaleur au niveau peuvent être prévus par exemple des moyens générant de la chaleur par induction. Ceux-ci peuvent être similaires à ceux décrits pour le dispositif D1. Les moyens 122 s'étendent sur une hauteur de la virole correspondant à la hauteur maximale de l'agglomérat de MCP dans le réservoir.

Il peut être envisagé de créer des voies de circulation également au sein de l'agglomérat sur toute sa hauteur de sorte à assurer la circulation du matériau à changement de phase.

Le dispositif de la figure 3 comporte également des moyens 124 pour réduire le volume de l'agglomérat en détachant des copeaux de MCP de l'agglomérat. Ces moyens forment des moyens d'abrasion de l'agglomérat.

Dans l'exemple représenté, les moyens 124 comportent un disque disposé dans le fond inférieur du réservoir de sorte que l'agglomérat MCPS se forme sur le disque. Le disque est coaxial à la virole et est monté apte à pivoter autour de son axe dans la virole.

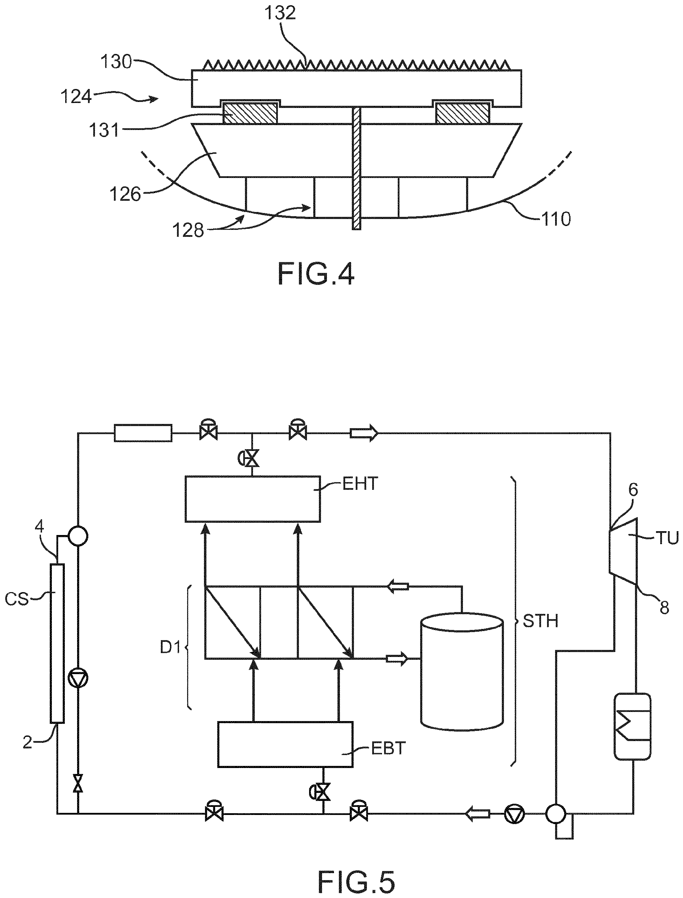

Sur la figure 4, on peut voir un exemple de réalisation des moyens 124. Ils comportent un plateau support fixe 126 reposant sur le fond inférieur, par exemple par l'intermédiaire de pieds 128, et un plateau mobile 130 en rotation par rapport au plateau fixe 126. Le plateau mobile 130 est mobile autour d'un axe sensiblement coaxial à l'axe de la virole. De préférence des galets de roulage 131 sont prévus en le plateau fixe 126 et le plateau mobile 130. Le plateau mobile 130 est disposé entre le plateau fixe 126 et l'agglomérat qui se forme dans la partie inférieure du réservoir de sorte que l'agglomérat repose sur le plateau mobile 130. Le plateau mobile 130 comporte également des éléments d'abrasion 132 pour venir arracher des copeaux par frottement au fond de l'agglomérat. Les éléments d'abrasion 132 sont par exemple formés de dents ou de trépans. Ainsi, en tournant le plateau mobile équipé des éléments d'abrasion arrachent des copeaux de MCP à l'agglomérat.

Un moteur M, de préférence disposé à l'extérieur du réservoir, met en rotation le plateau mobile.

De préférence des moyens de chauffage 134, par exemple similaires aux moyen 122 sont prévus sur le plateau support afin de faire apparaître du MCP liquide en partie basse du réservoir, en particulier au niveau du plateau mobile afin de faciliter la mise en rotation du plateau mobile 130. Les moyens 122 peuvent s'étendre jusqu'au fond inférieur du réservoir et le recouvrir afin de faciliter également la mise en rotation du disque.

Les moyens de réduction 124 mécaniques décrits sont un exemple de réalisation, mais d'autres réalisations sont envisageables.

Le fonctionnement de ce dispositif va maintenant être décrit.

En phase de décharge, le réservoir est rempli de MCP liquide.

La circulation du MCP est symbolisée par les flèches I et la circulation du caloporteur est symbolisé par les flèches II.

Le MCP liquide est aspirée par la pompe P par le premier orifice de passage 109 et circule dans l'un ou l'autre des échangeurs 104, 106, par exemple l'échangeur 104. De préférence les moyens de commutation limitent le débit de MCP circulant dans l'échangeur 106. La chaleur est donc principalement échangée dans l'échangeur 104. On suppose qu'initialement les deux échangeurs ne sont pas encrassés.

Le MCP liquide traverse l'échangeur 104 et échange de la chaleur avec le caloporteur qui circule dans les tubes. Le MCP se solidifie en partie en perdant de la chaleur, il se forme alors un coulis en sortie de l'échangeur 104. Le coulis contient au plus 60% de MCP solide pour assurer sa circulation.

Le coulis de MCP est alors déversé dans le réservoir 102 par le distributeur 141, le MCP solide sous forme de copeaux décante et se dépose dans le fond du réservoir. Le sens de circulation de la pompe est inversé.

Un agglomérat formé des copeaux de MCP se forme dans le fond du réservoir, les copeaux se soudent entre eux. Il est à noter qu'il reste une phase liquide entre les copeaux.

Comme dans le premier mode de réalisation, au cours des échanges thermiques dans l'échangeur 104, du MCP solide se fixe sur la surface extérieure des tubes provoquant une baisse de la puissance transférée entre le MCP et le caloporteur. On prévoit alors de réduire le débit dans l'échangeur 104 et d'augmenter celui dans l'échangeur 106, ce qui permet de supprimer le MCP solide déposé sur les tubes, en utilisant les techniques décrites en relation avec le premier mode de réalisation.

En début de phase de charge, le réservoir est en grande partie rempli avec l'agglomérat de MCP, seule la zone supérieure du réservoir contient du MCP liquide.

D'une part, les moyens pour créer une voie de circulation sont activés, les traçages électriques sont alors alimentés en courant, provoquant une fusion des zones radialement externes de l'agglomérat créant une voie de circulation 123 entre l'agglomérant et la face intérieure de la virole. Les résistances peuvent couvrir toute la périphérie de la virole provoquant une fusion sur toute la paroi latérale de l'agglomérat et créant une voie de circulation unique de forme annulaire ou alors n'être disposés que de manière discrète le long de la virole selon une direction axiale créant des voies de circulation séparées. La ou les voies de circulation s'étendent sur toute la hauteur de l'agglomérat de sorte que le liquide situé au dessus de l'agglomérat puisse s'écouler sous l'agglomérat au niveau du deuxième orifice de passage 112. Lorsque les voies de circulation sont formées, le liquide s'écoule alors du haut vers le bas jusqu'à l'orifice de passage 112.

D'autre part, les moyens d'abrasion sont activés en démarrant le moteur, le disque mobile se met à tourner et à frotter contre la base de l'agglomérat, arrachant des copeaux à l'agglomérat. Les copeaux se mélangent au MCP liquide s'écoulant par les voies de circulation, le mélange forme un coulis qui est aspiré par le deuxième orifice de passage 112, il circule alors dans l'un et/ou l'autre des échangeurs. Le coulis échange de la chaleur avec le caloporteur sous forme vapeur, la vapeur se condense et le coulis devient entièrement liquide et est ensuite renvoyé dans le réservoir via le premier orifice de passage 109.

Du fait de la présence de la ou des voies de circulation en périphérie de l'agglomérat, l'agglomérat n'est pas solidaire de la virole et descend dans le réservoir sous l'effet de son propre poids et reste en appuie sur le disque mobile qui poursuit son action d'abrasion.

L'alimentation électrique des résistances électriques est arrêtée dès que la ou les voies de circulation sont formées. En revanche le disque mobile est mis en rotation jusqu'à la fin de la phase de charge.

Ce mode de réalisation implique une consommation électrique pour mettre en mouvement le disque mobile, mais cette énergie est dissipée en partie en frottement et est récupérée dans la cuve sous forme de chaleur.

Comme pour le premier mode de réalisation, il permet en décharge, de contrôler la puissance thermique échangée puisque dès que celle-ci diminue, on commute vers l'autre échangeur. On peut donc maintenir la puissance échangée à une valeur optimale.

Ce deuxième mode de réalisation présente l'avantage par rapport au premier mode de réalisation d'avoir des échangeurs dont le fonctionnement est plus performant car, en phase de charge les échangeurs voient à la fois un changement de phase du MCP et un changement de phase du caloporteur. Alors que dans le premier mode de réalisation, en phase de charge, le MCP entrant dans les échangeurs est liquide, seul le caloporteur change de phase. Apparaît alors un faible écart de température dans certaine partie des échangeurs, et donc une faible puissance échangée et une perte d'efficacité des échangeurs. Cette perte d'efficacité est néanmoins compensée par le fait que deux échangeurs sont utilisés et que la surface d'échange disponible est suffisamment importante.

En outre, on peut travailler à température constante dans les échangeurs puisque les deux phases sont en présence.

Dans les deux modes de réalisation, les échangeurs sont placés préférentiellement au-dessus du réservoir, ainsi en cas d'arrêts prolongés une vidange du MCP contenu dans les échangeurs est possible par gravité, ce qui évite leur obstruction par le MCP solide.

A titre d'exemple uniquement, le réservoir peut avoir un volume de 250 m³, il a par exemple une hauteur de 10 m et une surface au sol de 25 m². Sur les 250 m³, environ 25% sont utilisés en partie comme réserve et en partie pour loger le distributeur de charge dans le premier mode de réalisation. Il peut contenir 360 t de NaNO₃.

Les deux échangeurs de type tubes calandre ont une surface d'échange de l'ordre de 125 m², les tubes ont par exemple un diamètre de 2,54 cm.

Le fluide caloporteur a par exemple une pression de 95 bars.

Le coefficient d'échange convectif retenu côté MCP de l'échangeur est de 5000 W/m².K et est de 25000 W/m².K côté fluide caloporteur

La puissance du dispositif de stockage est de 2,8 MW_{th.}

L'énergie requise pour déstocker à plein puissance pendant 6h est 16,8 MWhth.

Ce dispositif peut être utilisé dans une centrale solaire ayant une puissance thermique de 4,6 MWₜₕ et une puissance électrique de 1,4 MW_{elec.}

Le dispositif de stockage selon l'invention utilise les mêmes échangeurs en phase de charge et de décharge, ce qui simplifie le dispositif et réduit son coût. En outre, il ne comporte pas d'échangeurs noyés dans la cuve, il n'y a donc pas de conduite sous pression dans le réservoir, ni à travers les parois du réservoir ce qui simplifie sa fabrication. Il n'y a donc pas de risque de fuite de caloporteur sous pression dans le réservoir qui pourrait endommager, voire détruire, le réservoir.

De plus, en cas de réparation ou de maintenance à effectuer, les échangeurs sont accessibles alors que, lorsqu'ils sont immergés dans la cuve pleine de MCP, aucune réparation/inspection n'est possible. Par exemple, si le revêtement de surface des échangeurs doit être renouvelé, il est possible de démonter les échangeurs pour rénover le traitement de surface.

Par ailleurs, dans le cas où deux échangeurs sont utilisés, on peut prévoir d'en isoler un en vu de son remplacement ou de son nettoyage sans avoir à arrêter la centrale solaire.

Par rapport à l'état de la technique, les échangeurs sont de réalisation simple puisqu'ils ne nécessitent pas de racleur ou autre système pour nettoyer la surface extérieure des tubes.

Le dispositif D1 permet d'utiliser un MCP pur, tel que du NaNO₃

De plus, l'invention permet de découpler la puissance du stockage qui peut être transférée et qui dépend de la taille des échangeurs de la quantité d'énergie qui peut être stockée et qui est déterminée par le volume du réservoir. On peut envisager de modifier le rapport entre puissance et énergie en remplaçant les échangeurs, ceux-ci étant externes au réservoir. A l'inverse dans les systèmes de stockage passifs, l'échangeur est immergé dans le réservoir, le rapport puissance / énergie ne peut être modifié.

Le volume de MCP à proximité du fluide caloporteur est réduit car il s'agit du seul volume présent dans les échangeurs et non de la totalité du réservoir comme c'est le cas pour les systèmes passifs En cas d'accident et de contact entre le fluide caloporteur et le MCP les conséquences sont moindres du fait des plus faibles quantités pouvant réagir.

En outre, la présente invention permet de réduire les pertes thermiques du stockage et donc la consommation due au maintien en température. En effet, le stockage présente un taille réduite, ce qui réduite la surface de déperdition. Par ailleurs, dans les dispositifs selon l'invention, il n'y pas d'échangeurs noyés, contrairement aux dispositifs de l'état de la technique, ces échangeurs créant de nombreux ponts thermiques.

Sur la figure 5, on peut voir représenté schématiquement un exemple d'application du dispositif de stockage thermique selon l'invention. La figure 5 représente une centrale solaire à concentration destinée à la production d'électricité comportant un champ solaire, une turbine produisant de l'électricité par un cycle thermodynamique et un système de stockage thermique intégrant le dispositif de stockage thermique selon l'invention.

La centrale solaire comporte un champ solaire de production de fluide chaud CS, celui-ci comprenant une entrée d'alimentation 2 en fluide froid et une sortie d'évacuation 4 en fluide chaud. L'installation comporte également une turbine TU, munie d'une entrée d'alimentation 6 et d'une sortie d'évacuation 8. La centrale solaire comporte un système de stockage thermique STH comprenant un étage de stockage thermique par chaleur sensible à basse température EBT, un dispositif de stockage thermique selon l'invention, par exemple D1, et un étage de stockage thermique par chaleur sensible à haute température EHT.

Sur la figure 5, c'est la phase de décharge qui est représentée.

Par exemple, en phase de décharge le caloporteur circule sous une pression de 95 Bar, l'eau sous forme liquide à 160°C entre dans l'étage EBT, en ressort sous forme liquide à 297°C. Ensuite elle entre sous forme liquide dans le dispositif de stockage D1, échange de la chaleur avec le MCP liquide et en ressort sous forme vapeur à 305°C. Puis elle entre dans l'étage EHT sous forme vapeur à 350°C et en ressort sous forme vapeur à 450°C et est envoyée vers la turbine.

En phase de charge, le caloporteur circule sous une pression de 105 bars, la vapeur d'eau entre dans l'étage EHT sous forme vapeur à 450°C en ressort sous forme vapeur à 320°C, entre dans le dispositif de stockage selon l'invention, cède de la chaleur au MCP et ressort du dispositif sous forme liquide à 214°C. Puis elle entre dans l'étage EBT d'où elle sort sous forme liquide à 160°C. L'eau est alors envoyée vers le champ solaire.

Le système de stockage thermique peut être utilisé soit à la place du champ solaire, soit en complément du champ solaire.

Le dispositif de stockage thermique peut être utilisé en association avec un ou des dispositifs de stockage thermique sous forme de chaleur sensible ou seul.

Il est particulièrement adapté au stockage thermique dans des centrales solaires à concentration, par exemple à génération directe de vapeur, mais il peut être utilisé dans d'autres domaines où un stockage thermique est requis, par exemple pour stocker les chaleurs fatales issues de l'industrie, pour des stockages pour lesquels il est intéressant de découpler le moment de production du moment de consommation comme le froid industriel ou encore la climatisation à grande échelle, pour le secteur du chauffage comme les chaufferies collectives ou réseaux de chaleur.

Le dispositif de stockage est particulièrement adapté aux stockages thermiques utilisant un MCP ayant une faible conductivité thermique puisqu'il permet de limiter les inconvénients de cette faible conductivité thermique. Le deuxième mode de réalisation est également particulièrement adapté aux stockages de chaleur de vapeur d'eau ou tout fluide thermique caloporteur qui change de phase lorsqu'il est échauffé.

## Revendications

1. Dispositif de stockage thermique sous forme de chaleur latente comportant un réservoir (2) contenant au moins un matériau à changement de phase, par exemple du NaNO₃ + 1% NaOH, au moins un premier échangeur thermique (4, 104) disposé à l'extérieur du réservoir (2), ledit échangeur thermique (4, 104) étant destiné à assurer un échange thermique entre le matériau à changement de phase contenu dans le réservoir (2) et un caloporteur en phase de charge et en phase de décharge, des premiers moyens de connexion entre le réservoir et l'échangeur thermique afin d'assurer une circulation du matériau à changement de phase contenu dans le réservoir (2) à travers le premier échangeur thermique (4, 104), des moyens (P) de mise en circulation du matériau à changement de phase entre le réservoir (2) et le premier échangeur thermique (4, 104), le matériau à changement de phase étant dans le réservoir en partie en phase solide formant un agglomérat (MCPS), au moins en début d'une phase de charge, ledit agglomérat (MCPS) étant situé dans une partie inférieure du réservoir (2),
**caractérisé en ce que** ledit dispositif comporte :
- des moyens (22, 122) aptes à créer au moins une voie de circulation dans l'agglomérat (MCPS) et/ou entre l'agglomérat (MCPS) et une paroi du réservoir (2) entre une zone supérieure et une zone inférieure de sorte à assurer une circulation du matériau à changement de phase liquide dans l'agglomérat (MCPS) et/ou entre l'agglomérat (MCPS) et une paroi du réservoir (2), et
- des moyens internes au réservoir assurant une réduction du volume de l'agglomérat (MCPS) et permettant la circulation de matériau à changement de phase vers le premier échangeur thermique (4, 104), dit moyens de réduction.

2. Dispositif de stockage thermique selon la revendication 1, dans lequel les moyens de réduction sont destinés à être disposés dans l'agglomérat.

3. Dispositif de stockage thermique selon la revendication 1 ou 2, dans lequel les moyens (22, 122) aptes à créer au moins une voie de circulation sont des moyens aptes à apporter ou à générer de la chaleur dans ou autour de l'agglomérat (MCPS), les moyens (22, 122) aptes à créer au moins une voie de circulation générant avantageusement de la chaleur par effet Joule.

4. Dispositif de stockage thermique selon l'une des revendications 1 à 3, dans lequel les moyens (22) aptes à créer au moins une voie de circulation sont disposés au moins dans la zone centrale du réservoir (2).

5. Dispositif de stockage thermique selon la revendication 3 ou 4, dans lequel les moyens de réduction assurent une circulation du matériau à changement de phase dans la voie de circulation.

6. Dispositif de stockage thermique selon la revendication 5, dans lequel les moyens de réduction comportent un distributeur de charge (18) comprenant au moins un tube (20) muni d'une première extrémité connectée au premier échangeur thermique (4) de sorte qu'en phase de charge le premier échangeur thermique (4) alimente le tube (20) en matériau à changement de phase liquide, ledit tube étant muni d'une deuxième extrémité ouverte débouchant dans ladite voie de circulation, les moyens (22) aptes à créer au moins une voie de circulation étant avantageusement aptes à créer plusieurs voies de circulation et les moyens assurant une réduction du volume de l'agglomérat (MCPS) comportent un distributeur (18) comprenant autant de tubes (20) que de voies de circulation, lesdits tubes (20) étant alimentés en parallèle par le premier échangeur thermique (4) en phase de charge.

7. Dispositif de stockage thermique selon la revendication 6, dans lequel les moyens (22) aptes à créer au moins une voie de circulation sont portés par le ou les tubes (20) du distributeur de charge (18), lesdits moyens (22) étant formés par des traçages électriques chauffants reliés à une alimentation électrique.

8. Dispositif de stockage thermique selon l'une des revendications 1 à 7, comportant un distributeur de décharge (16) comprenant une extrémité connectée au premier échangeur thermique (4, 104) de sorte qu'en phase de décharge le premier échangeur thermique (4, 104) alimente le distributeur de décharge (16, 106) en un mélange de phase liquide et de phase solide du matériau à changement de phase.

9. Dispositif de stockage thermique selon l'une des revendications 1 à 3, dans lequel les moyens (122) aptes à créer au moins une voie de circulation sont portés par une paroi latérale du réservoir (2) de sorte à créer au moins une voie de circulation entre l'agglomérat (MCPS) et la paroi latérale du réservoir (2), les moyens (122) aptes à créer au moins une voie de circulation s'étendant avantageusement sur une hauteur de la paroi latérale égale au moins à une hauteur maximale de l'agglomérat (MCPS).

10. Dispositif de stockage thermique selon la revendication 9, dans lequel les moyens de réduction comportent des moyens d'abrasion (124) de l'agglomérat (MCPS) réduisant son volume par retrait de copeaux de matériau à changement de phase, de sorte qu'en phase de charge, un mélange de phase solide et de phase liquide de matériau à changement de phase circule du réservoir vers le premier échangeur thermique (104), les moyens d'abrasion (124) étant avantageusement disposés dans la partie inférieure du réservoir (2) de sorte que la majeure partie du volume de l'agglomérat (MCPS) soit située sur les moyens d'abrasion (124).

11. Dispositif de stockage thermique selon la revendication 10, dans lequel les moyens d'abrasion comportent un plateau tournant (130) apte à tourner dans le réservoir (2) de sorte à frotter contre l'agglomérat (MCPS) et des moyens (M) de mise en rotation du plateau tournant, ledit plateau tournant (130) comportant des éléments d'abrasion (132) destinés à être en contact avec l'agglomérat (MCPS).

12. Dispositif de stockage thermique selon l'une des revendications 1 à 11, comportant un deuxième échangeur thermique (6, 106) et des deuxièmes moyens de connexion entre le réservoir (2, 102) et le deuxième échangeur thermique (6, 106) afin d'assurer un circulation du matériau à changement de phase contenu dans le réservoir (2, 102) à travers le deuxième échangeur (6, 106), et des moyens de régulation (14, 114) du débit dans le premier échangeur thermique (4, 104) et dans le deuxième échangeur thermique (6, 106), ledit dispositif comportant également avantageusement des moyens de surveillance de la puissance thermique échangée au sein des premier (4, 104) et deuxième (6, 106) échangeurs thermiques et une unité de contrôle contrôlant les moyens de régulation du débit de sorte qu'en cas de détection d'un puissance thermique échangée au sein d'un des premier (4, 104) et deuxième (6, 106) échangeurs thermiques , inférieure à un seuil donné, le débit soit réduit dans ledit échangeur thermique et le débit soit augmenté dans l'autre échangeur thermique.

13. Dispositif de stockage thermique selon la revendication 12, dans lequel le premier (4, 104) et/ou le deuxième (6, 106) échangeur thermique comportent un calandre et au moins un tube, le matériau changement de phase circulant dans la calandre et le caloporteur circulant dans le tube, un revêtement de surface sur une surface extérieure du tube destinée à être en contact avec le matériau à changement de phase, ledit revêtement de surface présentant une faible mouillabilité par rapport au matériau à changement de phase, le revêtement de surface étant avantageusement un chromage, un polissage ou un dépôt de nitrure de bore.

14. Système de stockage comportant un dispositif de stockage sous forme de chaleur latente (D1, D2) selon l'une des revendications 1 à 13, un dispositif de stockage thermique à haute température sous forme de chaleur sensible (EHT), un dispositif de stockage thermique à basse température sous forme de chaleur sensible (EBT), lesdits dispositifs de stockage thermique étant connectés de sorte que le caloporteur circule en phase de charge dans le dispositif de stockage thermique à haute température sous forme de chaleur sensible (EHT), puis dans le dispositif de stockage sous forme de chaleur latente (D1, D2), puis dans le dispositif de stockage thermique à basse température sous forme de chaleur sensible (EBT), et en phase de décharge le caloporteur circule dans le dispositif de stockage thermique à basse température sous forme de chaleur sensible (EBT), puis dans le dispositif de stockage sous forme de chaleur latente (D1, D2), puis dans le dispositif de stockage thermique à haute température sous forme de chaleur sensible (EHT).

15. Centrale solaire à concentration comportant au moins un champ solaire (CS), des moyens de conversion (TU) de l'énergie thermique et au moins un système de stockage thermique (STH) selon la revendication 14.

16. Procédé de fonctionnement d'un dispositif de stockage selon l'une des revendications 1 à 13, un caloporteur circulant dans ledit au moins un échangeur thermique, comportant :
en phase de charge les étapes :
- création d'au moins une voie de circulation dans l'agglomérat,
- réduction du volume de l'agglomérat,
- circulation du matériau à changement de phase issu au moins en partie de la réduction de volume de l'agglomérat vers l'échangeur thermique,
- alimentation du réservoir avec le matériau à changement de phase liquide sortant de l'échangeur thermique, et
en phase de décharge,
- mise en circulation du matériau à changement de phase liquide entre le réservoir et l'échangeur thermique,
- production du mélange liquide solide par l'échangeur thermique,
- alimentation du réservoir avec un mélange de phase liquide et de phase solide du matériau à changement de phase sortant de l'échangeur thermique,
- accumulation de la phase solide du matériau à changement de phase dans la partie inférieure du réservoir.

17. Procédé de fonctionnement selon la revendication 16, dans lequel la réduction du volume de l'agglomérat est obtenue par circulation de matériau à changement de phase surchauffé dans la voie de circulation et par fusion d'une partie de l'agglomérat, la réduction du volume de l'agglomérat étant avantageusement obtenue par abrasion de l'agglomérat.

18. Procédé de fonctionnement selon la revendication 16 ou 17, dans lequel le dispositif comporte deux échangeurs thermiques, et dans lequel lors de la phase de décharge, du matériau à changement de phase circule dans l'un des échangeurs thermiques avec un débit plus important que dans l'autre échangeur thermique, ledit procédé comportant les étapes :
- la surveillance la puissance thermique échangée dans l'échangeur thermique dans lequel le matériau à changement de phase circule avec le plus grand débit,
- si la puissance thermique échangée est inférieure à un seuil donné, réduction du débit dans ledit échangeur thermique et augmentation du débit dans l'autre échangeur thermique.

19. Procédé de fonctionnement selon la revendication 18, dans lequel il est prévu dans l'échangeur thermique dans lequel la chute de puissance a été détectée une étape de retrait du matériau à changement de phase solide déposé sur des surfaces d'échange thermique dudit échangeur thermique, l'étape de retrait prévoyant avantageusement l'arrêt de la circulation du caloporteur dans ledit échangeur thermique ou la circulation de vapeur surchauffée dans ledit échangeur thermique.

## Patentansprüche

1. Wärmespeichervorrichtung zum Speichern von latenter Wärme, enthaltend einen Behälter (2), der zumindest ein Phasenwechselmaterial, beispielsweise NaNO₃ + 1 % NaOH, enthält, zumindest einen ersten Wärmetauscher (4, 104), der außerhalb des Behälters (2) angeordnet ist, wobei der Wärmetauscher (4, 104) dazu bestimmt ist, einen Wärmeaustausch zwischen dem in dem Behälter (2) enthaltenen Phasenwechselmaterial und einen Wärmeträger in Ladephase und in Entladephase sicherzustellen, erste Verbindungsmittel zum Verbinden zwischen dem Behälter und dem Wärmetauscher, um eine Strömung des in dem Behälter (2) enthaltenen Phasenwechselmaterials durch den ersten Wärmetauscher (4, 104) hindurch sicherzustellen, Umwälzmittel (P) zum Umwälzen des Phasenwechselmaterials zwischen dem Behälter (2) und dem ersten Wärmetauscher (4, 104), wobei das Phasenwechselmaterial in dem Behälter teilweise in Feststoffphase vorliegt, die ein Agglomerat (MCPS) bildet, zumindest zu Beginn einer Ladephase, wobei das Agglomerat (MCPS) in einem unteren Abschnitt des Behälters (2) liegt, **dadurch gekennzeichnet, dass** die Vorrichtung enthält:
- Mittel (22, 122), die dazu geeignet sind, zumindest einen Strömungsweg in dem Agglomerat (MCPS) und/oder zwischen dem Agglomerat (MCPS) und einer Wand des Behälters (2) zwischen einem oberen Bereich und einem unteren Bereich zu bilden, so dass eine Strömung des flüssigen Phasenwechselmaterials in dem Agglomerat (MCPS) und/oder zwischen dem Agglomerat (MCPS) und einer Wand des Behälters (2) sichergestellt wird, und
- dem Behälter inne liegende Mittel, die eine Volumenminderung des Agglomerats (MCPS) sicherstellen und die Strömung des Phasenwechselmaterials zum ersten Wärmetauscher (4, 104) hin gestatten, Minderungsmittel genannt.

2. Wärmespeichervorrichtung nach Anspruch 1, wobei die Minderungsmittel dazu bestimmt sind, in dem Agglomerat angeordnet zu werden.

3. Wärmespeichervorrichtung nach Anspruch 1 oder 2, wobei die Mittel (22, 122), die dazu geeignet sind, zumindest einen Strömungsweg zu bilden, Mittel sind, die dazu geeignet sind, Wärme in bzw. um das Agglomerat (MCPS) herum einzutragen bzw. zu erzeugen, wobei die zum Bilden von zumindest einem Strömungsweg geeigneten Mittel (22, 122) vorteilhaft Wärme durch Joule-Effekt erzeugen.

4. Wärmespeichervorrichtung nach einem der Ansprüche 1 bis 3, wobei die zum Bilden von zumindest einem Strömungsweg geeigneten Mittel (22) zumindest in dem Mittelbereich des Behälters (2) angeordnet sind.

5. Wärmespeichervorrichtung nach Anspruch 3 oder 4, wobei die Minderungsmittel eine Strömung des Phasenwechselmaterials auf dem Strömungsweg sicherstellen.

6. Wärmespeichervorrichtung nach Anspruch 5, wobei die Minderungsmittel einen Ladungsverteiler (18) mit zumindest einem Rohr (20) aufweisen, das mit einem ersten Ende versehen ist, das mit dem ersten Wärmetauscher (4) verbunden ist, so dass in Ladephase der erste Wärmetauscher (4) das Rohr (20) mit flüssigem Phasenwechselmaterial versorgt, wobei das Rohr mit einem zweiten offenen Ende versehen ist, das in den Strömungsweg mündet, wobei die zum Bilden von zumindest einem Strömungsweg geeigneten Mittel (22) vorteilhaft dazu geeignet sind, mehrere Strömungswege zu bilden, und die eine Volumenminderung des Agglomerats (MCPS) sicherstellenden Mittel einen Verteiler (18) aufweisen, der ebenso viele Rohre (20) wie Strömungswege aufweist, wobei die Rohre (20) über den ersten Wärmetauscher (4) in Ladephase parallel versorgt werden.

7. Wärmespeichervorrichtung nach Anspruch 6, wobei die zum Bilden zumindest eines Strömungswegs geeigneten Mittel (22) von dem Rohr bzw. den Rohren (20) des Ladungsverteilers (18) getragen werden, wobei die Mittel (22) aus elektrischen Begleitheizungen gebildet sind, die mit einer Stromversorgung verbunden sind.

8. Wärmespeichervorrichtung nach einem der Ansprüche 1 bis 7, enthaltend einen Entladungsverteiler (16) mit einem Ende enthält, das mit dem ersten Wärmetauscher (4, 104) verbunden ist, so dass in Entladephase der erste Wärmetauscher (4, 104) den Entladungsverteiler (16, 106) mit einem Gemisch des Phasenwechselmaterials aus flüssiger Phase und fester Phase versorgt.

9. Wärmespeichervorrichtung nach einem der Ansprüche 1 bis 3, wobei die zum Bilden von zumindest einem Strömungsweg geeigneten Mittel (122) von einer Seitenwand des Behälters (2) getragen werden, so dass zumindest ein Strömungsweg zwischen dem Agglomerat (MCPS) und der Seitenwand des Behälters (2) gebildet wird, wobei die zum Bilden von zumindest einem Strömungsweg geeigneten Mittel (122) sich vorteilhaft über eine Höhe der Seitenwand erstrecken, die gleich zumindest einer maximalen Höhe des Agglomerats (MCPS) ist.

10. Wärmespeichervorrichtung nach Anspruch 9, wobei die MinderungsMittel Abriebmittel (124) für das Agglomerat (MCPS) aufweisen, die dessen Volumen durch Spanabhebung von dem Phasenwechselmaterial vermindern, so dass in Ladephase ein Gemisch des Phasenwechselmaterials aus fester Phase und flüssiger Phase vom Behälter zum ersten Wärmetauscher (104) strömt, wobei die Abriebmittel (124) vorteilhaft in dem unteren Abschnitt des Behälters (2) angeordnet sind, so dass der Großteil des Volumens des Agglomerats (MCPS) auf den Abriebmitteln (124) liegt.

11. Wärmespeichervorrichtung nach Anspruch 10, wobei die Abriebmittel einen Drehteller (130) enthalten, der dazu geeignet ist, sich im Behälter (2) so zu drehen, dass er am Agglomerat (MCPS) reibt, sowie Drehantriebsmittel (M) zum Drehantrieb des Drehtellers, wobei der Drehteller (130) Abriebelemente (132) aufweist, die dazu bestimmt sind, mit dem Agglomerat (MCPS) in Kontakt zu gelangen.

12. Wärmespeichervorrichtung nach einem der Ansprüche 1 bis 11, enthaltend einen zweiten Wärmetauscher (6, 106) und zweite Verbindungsmittel zum Verbinden zwischen dem Behälter (2, 102) und dem zweiten Wärmetauscher (6, 106), um eine Strömung des in den Behälter (2, 102) enthaltenden Phasenwechselmaterials durch den zweiten Wärmetauscher (6, 106) hindurch sicherzustellen, sowie Regelmittel (14, 114) zum Regeln der Durchsatzmenge in dem ersten Wärmetauscher (4, 104) und in dem zweiten Wärmetauscher (6, 106), wobei die Vorrichtung vorteilhaft auch Überwachungsmittel zum Überwachen der innerhalb des ersten (4, 1004) und des zweiten (6, 106) Wärmetauschers ausgetauschten Wärmeleistung und eine Kontrolleinheit aufweist, welche die Regelmittel zum Regeln der Durchsatzmenge so steuert, dass im Falle der Erfassung einer Wärmeleistung, die innerhalb von einem aus erstem (4, 104) und zweitem (6, 106) Wärmetauscher ausgetauscht wird und geringer als ein gegebener Schwellwert ist, die Durchsatzmenge in dem einen Wärmetauscher vermindert wird und die Durchsatzmenge in dem anderen Wärmetauscher erhöht wird.

13. Wärmespeichervorrichtung nach Anspruch 12, wobei der erste (4, 104) und/oder der zweite (6, 106) Wärmetauscher einen Kalander und zumindest ein Rohr enthält/enthalten, wobei das Phasenwechselmaterial in dem Kalander strömt und der Wärmeträger in dem Rohr strömt, sowie eine Oberflächenbeschichtung auf einer Außenfläche des Rohrs, die dazu bestimmt ist, mit dem Phasenwechselmaterial in Kontakt zu gelangen, wobei die Oberflächenbeschichtung eine bezüglich des Phasenwechselmaterials geringe Benetzbarkeit aufweist und wobei die Oberflächenbeschichtung vorteilhaft eine Verchromung, eine Politur oder ein Bornitridauftrag ist.

14. Speichersystem, enthaltend eine Wärmespeichervorrichtung zum Speichern von latenter Wärme (D1, D2) nach einem der Ansprüche 1 bis 13, eine Hochtemperatur-Wärmespeichervorrichtung zur Wärmespeicherung von fühlbarer Wärme (EHT) und eine Niedrigtemperatur-Wärmespeichervorrichtung zur Wärmespeicherung von fühlbarer Wärme (EBT), wobei die Wärmespeichervorrichtungen so verbunden sind, dass der Wärmeträger in Ladephase in die Hochtemperatur-Wärmespeichervorrichtung zur Wärmespeicherung von fühlbarer Wärme (EHT), dann in die Latent-Wärmespeichervorrichtung (D1, D2), und dann in die Niedrigtemperatur-Wärmespeichervorrichtung zur Wärmespeicherung von fühlbarer Wärme (EBT) strömt, und wobei in Entladephase der Wärmeträger in die Niedrigtemperatur-Wärmespeichervorrichtung zur Wärmespeicherung von fühlbarer Wärme (EBT), dann in die Latent-Wärmespeichervorrichtung (D1, D2) und dann in die Hochtemperatur-Wärmespeichervorrichtung zur Wärmespeicherung von fühlbarer Wärme (EHT) strömt.

15. Solarthermisches Kraftwerk, enthaltend zumindest ein Solarfeld (CS), UmwandlungsMittel (TU) zum Umwandeln von Wärmeenergie und zumindest ein Wärmespeichersystem (STH) nach Anspruch 14.

16. Verfahren zum Betreiben einer Speichervorrichtung nach einem der Ansprüche 1 bis 13, wobei ein Wärmeträger in dem zumindest einen Wärmetauscher strömt, umfassend:
in Ladephase folgende Schritte:
- Bilden von zumindest einem Strömungsweg in dem Agglomerat,
- Vermindern des Volumens des Agglomerats,
- Strömen des Phasenwechselmaterials, das zumindest teilweise aus der Volumenminderung des Agglomerats stammt, zum Wärmetauscher,
- Versorgen des Behälters mit flüssigem Phasenwechselmaterial, das aus dem Wärmetauscher austritt, und
in Entladephase folgende Schritte:
- Umwälzen des flüssigen Phasenwechselmaterials zwischen dem Behälter und dem Wärmetauscher,
- Erzeugen des Gemisches aus Flüssigkeit und Feststoff durch den Wärmetauscher,
- Versorgen des Behälters mit einem Gemisch des Phasenwechselmaterials aus Flüssigphase und Feststoffphase, das aus dem Wärmetauscher austritt,
- Ansammeln der Feststoffphase des Phasenwechselmaterials in dem unteren Abschnitt des Behälters.

17. Betriebsverfahren nach Anspruch 16, wobei die Volumenminderung des Agglomerats durch Strömung des überhitzten Phasenwechselmaterials auf dem Strömungsweg und durch Schmelzen eines Teils des Agglomerats erhalten wird, wobei die Volumenminderung des Agglomerats vorteilhaft durch Abrieb des Agglomerats erhalten wird.

18. Betriebsverfahren nach Anspruch 16 oder 17, wobei die Vorrichtung zwei Wärmetauscher enthält und wobei in der Entladephase das Phasenwechselmaterial in einem der Wärmetauscher mit einer höheren Durchsatzmenge als in dem anderen Wärmetauscher strömt, wobei das Verfahren nachfolgende Schritte umfasst:
- Überwachen der Wärmeleistung, die in dem Wärmetauscher ausgetauscht wird, in welchem das Phasenwechselmaterial mit der höheren Durchsatzmenge strömt,
- wenn die ausgetauschte Wärmeleistung geringer als ein gegebener Schwellwert ist, Vermindern der Durchsatzmenge in dem einen Wärmetauscher und Erhöhen der Durchsatzmenge in dem anderen Wärmetauscher.

19. Betriebsverfahren nach Anspruch 18, wobei in dem Wärmetauscher, in dem der Leistungsabfall erfasst wurde, ein Schritt des Entfernens des festen Phasenwechselmaterials erfolgt, das auf den Wärmeaustauschflächen des Wärmetauschers abgelagert ist, wobei der Schritt des Entfernens vorteilhaft das Unterbrechen der Strömung des Wärmeträgers in dem Wärmetauscher oder die Strömung von überhitztem Dampf in dem Wärmetauscher vorsieht.

## Claims

1. Thermal storage device for thermal storage in the form of latent heat comprising a reservoir (2) containing at least one phase-change material, for example NaNO₃ + 1% NaOH, at least one first heat exchanger (4, 104) arranged outside the reservoir (2), wherein the heat exchanger (4, 104) is intended to ensure heat exchange between the phase-change material contained in the reservoir (2) and a coolant in charge phase and in discharge phase, wherein first connecting means between the reservoir and the heat exchanger ensure circulation of the phase-change material contained in the reservoir (2) through the first heat exchanger (4, 104), means (P) for circulation of the phase-change material between the reservoir (2) and the first heat exchanger (4, 104), wherein the phase-change material is in the reservoir partially as solid phase material system (MCPS) forming an agglomerate at least at the beginning of a charge phase, wherein the (MCPS) agglomerate is located in a lower part of the reservoir (2), **characterized in that** the device comprises:
- means (22, 122) designed to create at least one circulation path in the (MCPS) agglomerate and/or between the (MCPS) agglomerate and a wall of the reservoir (2) between an upper zone and a lower zone, to ensure circulation of the liquid phase-change material in the (MCPS) agglomerate and/or between the (MCPS) agglomerate and a wall of the reservoir (2), and
- internal means in the reservoir to ensure a reduction of the volume of the (MCPS) agglomerate and to allow the circulation of phase-change material towards the first heat exchanger (4, 104), of the reduction means.

2. Thermal storage device according to claim 1, wherein the reduction means are intended to be arranged in the agglomerate.

3. Thermal storage device according to claim 1 or 2, wherein means (22, 122) capable of creating at least one circulation path are means capable of supplying or generating heat in or around the (MCPS) agglomerate, wherein means (22, 122) capable of creating at least one circulation path advantageously generate heat by the Joule effect.

4. Thermal storage device according to one of the claims 1 to 3, wherein the means (22) capable of creating at least one path are arranged at least in the central zone of the reservoir (2).

5. Thermal storage device according to claim 3 or 4, wherein the reduction means ensure circulation of the phase-change material in the circulation path.

6. Thermal storage device according to claim 5, wherein the reduction means comprise a charge distributor (18) comprising at least one tube (20) having a first end connected to the first heat exchanger (4) so that in the charge phase, the first heat exchanger (4) feeds the tube (20) with liquid phase-change material, wherein the tube is provided with a second open end that opens into said circulation path, and wherein means (22) designed to create at least one circulation path are advantageously capable of creating several circulation paths, while the means ensuring a reduction in the volume of the (MCPS) agglomerate comprise a distributor (18) comprising as many tubes (20) as there are circulation paths, wherein the tubes (20) are supplied in parallel by the first heat exchanger (4) in charge phase.

7. Thermal storage device according to claim 6, wherein the means (22) designed to create at least one flow path are carried by the tube(s) (20) of the charge distributor (18), wherein the means (22) are formed by electric heating tracings connected to a power supply.

8. Thermal storage device according to one of the claims 1 to 7, comprising a discharge distributor (16) comprising an end connected to the first heat exchanger (4, 104) so that in the discharge phase, the first heat exchanger (4, 104) feeds the discharge distributor (16, 106) with a liquid phase and solid phase mixture of the phase-change material.

9. Thermal storage device according to one of the claims 1 to 3, wherein the means (122) designed to create at least one path are carried by a side wall of the reservoir (2) in order to create at least one flow path between the (MCPS) agglomerate and the side wall of the reservoir (2), wherein the means (122) capable of creating at least one circulation path extend advantageously over a height of the side wall equal to at least one maximum (MCPS) agglomerate height.

10. Thermal storage device according to claim 9, wherein the reduction means comprise abrasion means (124) of the (MCPS) agglomerate for reducing its volume by removal of chips of phase-change material, so that in the charge phase, a mixture of solid phase and liquid phase of phase-change material flows from the reservoir to the first heat exchanger (104), wherein the abrasion means (124) are advantageously arranged in the lower part of the reservoir (2) so that the bulk of the volume of the agglomerate (MCPS) is located on the abrasion means (124).

11. Thermal storage device according to claim 10, wherein the abrasion means comprise a turntable (130) rotatable in the reservoir (2) in order to rub against the (MCPS) agglomerate and means (M) designed to rotate the turntable, wherein the turntable (130) comprises abrasion elements (132) intended to be in contact with the (MCPS) agglomerate.

12. Thermal storage device according to one of the claims 1 to 11 comprising a second heat exchanger (6, 106) and second connecting means between the reservoir (2, 102) and the second heat exchanger (6, 106) to ensure circulation of the phase-change material contained in the reservoir (2, 102) through the second heat exchanger (6, 106), and flow control means (14, 114) in the first heat exchanger (4, 104) and in the second heat exchanger (6, 106), wherein the device also advantageously comprises means for monitoring the thermal power exchanged within the first (4, 104) and the second (6, 106) heat exchangers, and a control unit to control the flow control means so that in the event of detection of thermal power exchanged within one of the first (4, 104) and second (6, 106) heat exchangers falling below a given threshold, the flow is reduced in the one heat exchanger while the flow rate is increased in the other heat exchanger.

13. Thermal storage device according to claim 12, wherein the first (4, 104) and/or the second (6, 106) heat exchanger comprises a calender and at least one tube, wherein the phase-change material circulates in the calender while the coolant circulates in the tube, wherein a surface coating on an outer surface of the tube is designed to be in contact with the phase-change material, wherein the surface coating has low wettability relative to the phase-change material, and wherein the surface coating is advantageously chrome plated, polished or a deposition of boron nitride.

14. Storage system comprising a storage device for latent heat (D1, D2) according to one of the claims 1 to 13, wherein a high temperature thermal storage device in the form of sensible heat (EHT), a storage device for low temperature thermal storage in the form of sensible heat (EBT), wherein the thermal storage devices are connected so that the coolant circulates in charge phase in the high temperature thermal storage device in the form of sensible heat (EHT), then in the storage device in the form of latent heat (D1, D2), then in the low temperature thermal storage device in the form of sensible heat (EBT), while, in the discharge phase, the coolant circulates in the thermal storage device at low temperature in the form of sensible heat (EBT), then in the storage device in the form of latent heat (D1, D2), then in the thermal storage device at high temperature in the form of sensible heat (EHT).

15. Concentrating solar power plant comprising at least one solar field (CS), conversion means (TU) of the thermal energy, and at least one thermal storage system (STH) according to claim 14.

16. Method of operation of a storage device according to one of the claims 1 to 13, wherein a coolant flows in the at least one heat exchanger which comprises:
- in the charge phase the steps:
- creation of at least one circulation path in the agglomerate,
- reduction of the volume of the agglomerate,
- circulation of the phase-change material resulting at least in part from the reduction in volume of the agglomerate towards the heat exchanger,
- supply of the reservoir with the liquid phase-change material leaving the heat exchanger, and
in the discharge phase,
- circulation of the liquid phase-change material between the reservoir and the heat exchanger,
- production of the solid liquid mixture by the heat exchanger,
- supplying the reservoir with a mixture of liquid phase and solid phase of the phase-change material leaving the heat exchanger,
- accumulation of the solid phase of the phase-change material in the lower part of the reservoir.

17. Method of operation according to claim 16, wherein the reduction of the volume of the agglomerate is obtained by circulation of superheated phase-change material in the circulation path, and by melting of a portion of the agglomerate, wherein the reduction of volume of the agglomerate is advantageously obtained by abrasion of the agglomerate.

18. Method of operation according to claim 16 or 17, wherein the device comprises two heat exchangers, and wherein during the discharge phase, the phase-change material circulates in one of the heat exchangers with a larger flow rate than in the other heat exchanger, wherein the method comprises the steps of:
- monitoring the thermal power exchanged in the heat exchanger in which the phase-change material circulates with the largest flow rate,
- if the thermal power exchanged is less than a given threshold, reducing the flow rate in the one heat exchanger and increasing the flow rate in the other heat exchanger.

19. Method of operation according to claim 18, wherein in the heat exchanger in which the power drop has been detected a step is provided to remove the solid phase-change material deposited on the heat exchange surfaces of the heat exchanger, wherein the removal step advantageously provides for the stopping of the circulation of the coolant in the heat exchanger, or of superheated steam circulation in the heat exchanger.
